# EUROPÄISCHE PATENTSCHRIFT

(11) **EP 3 969 734 B1**
(45) Veröffentlichungstag und Bekanntmachung des Hinweises auf die Patenterteilung: **10.07.2024**
(21) Anmeldenummer: 20726784.0
(22) Anmeldetag: 15.05.2020
(51) Int. Cl.: F01N 13/00

(54) **RINGKATALYSATOR**
ANNULAR CATALYTIC CONVERTER
CATALYSEUR ANNULAIRE

(30) Priorität: 15.05.2019 DE 102019207065
(43) Veröffentlichungstag der Anmeldung: 23.03.2022
(73) Patentinhaber: Vitesco Technologies GmbH, 93055 Regensburg (DE)
(72) Erfinder: BRÜCK, Rolf, 81737 München (DE); HIRTH, Peter, 81737 München (DE); SCHEPERS, Sven, 81737 München (DE); ODENTHAL, David, 81737 München (DE); KARIBAYEV, Marat, 81737 München (DE); KURTH, Ferdi, 81737 München (DE)
(74) Vertreter: Vitesco Technologies
(86) Internationale Anmeldenummer: PCT/EP2020/063629
(87) Internationale Veröffentlichungsnummer: WO 2020/229664

(56) Entgegenhaltungen:
- EP-A1- 2 873 821
- EP-A2- 1 890 016
- WO-A1-89/02978
- WO-A1-97/43528
- US-A- 4 094 645

## Beschreibung

### Technisches Gebiet

Die Erfindung betrifft einen Ringkatalysator, mit einer ersten rohrförmigen Strömungsstrecke, mit einem Umlenkbereich und mit einer zweiten ringförmigen Strömungsstrecke, wobei die rohrförmige Strömungsstrecke durch ein Innenrohr gebildet ist, wobei die ringförmige Strömungsstrecke zwischen dem Innenrohr und einem das Innenrohr umgebenden Außenrohr ausgebildet ist und der Umlenkbereich zur Umlenkung der Abgasströmung aus der rohrförmigen Strömungsstrecke in die ringförmige Strömungsstrecke topfförmig ausgebildet ist, wobei das Innenrohr und/oder das Außenrohr einen entlang der Strömungsrichtung des Abgases sich erweiternden oder sich verjüngenden konischen Querschnitt aufweist.

### Stand der Technik

Sogenannte Ringkatalysatoren werden insbesondere dann zum Zwecke der Abgasnachbehandlung eingesetzt, wenn der zur Verfügung stehende Bauraum begrenzt ist und trotzdem eine möglichst lange Strömungsstrecke innerhalb des Katalysators erreicht werden soll.

Ein Ringkatalysator weist eine zentrale rohrförmige Strömungsstrecke auf. Aus der rohrförmigen Strömungstrecke strömt das Abgas in eine Umlenkkammer ein, die eine Umlenkung des Abgases in radialer Richtung nach Außen erzeugt und schließlich das Abgas derart umlenkt, dass es um 180 Grad entgegengesetzt zur Strömungsrichtung in der rohrförmigen Strömungsstrecke durch eine ringförmige Strömungsstrecke strömt. Die rohrförmige Strömungsstrecke und die ringförmige Strömungsstrecke können dabei beispielsweise konzentrisch zueinander angeordnet sein. Die ringförmige Strömungsstrecke wird nach Innen durch die Wandung der rohrförmigen Strömungsstrecke begrenzt und nach Außen durch ein Außenrohr und/oder einen Mantel.

Ringkatalysatoren werden insbesondere in turboaufgeladenen Verbrennungsmotoren direkt hinter dem Turbolader eingesetzt. Für eine optimale Funktionsweise der in der ringförmigen Strömungsstrecke angeordneten katalytisch aktiven Trägermatrizen ist eine möglichst hohe Konzentrations- und Strömungsgleichverteilung vorteilhaft.

Die EP 2 873 821 A1 offenbart eine kompakte Abgasnachbehandlungsvorrichtung für einen Verbrennungsmotor bereitzustellen, wobei die Abgasnachbehandlungsvorrichtung einen Katalysator umfasst, wobei der Katalysator ein Einkapselungselement, ein Rohrelement, ein Abgasleitmittel und zwei Katalysatorsubstrate umfasst. Die Abgasnachbehandlungsvorrichtung bietet gute Abgasmischungseigenschaften. Darüber hinaus ist die Abgasführungseinrichtung so konfiguriert, dass sie durch einen gekrümmten und daher elastischen Abschnitt thermischen Belastungen standhält, die durch die Wärmeänderungen der Abgasemissionen verursacht werden.

Die US 4 094 645 A offenbart eine Kombination aus Schalldämpfer und Katalysator, welche ein monolithisches Katalysatorelement mit axialer Strömung aufweist, um die Abgase eines Verbrennungsmotors zu behandeln und deren Geräusch teilweise zu reduzieren. Das Gerät enthält eine Venturi-Röhre im Abgaseinlassweg, um Sekundärluft hinzuzufügen. Die Schalldämpfung erfolgt stromaufwärts des Venturis, wo der entstehende Gegendruck den Wirkungsgrad des Venturis am wenigsten beeinträchtigt.

Die WO 89/02978 A1 offenbart einen Katalysator, insbesondere für Verbrennungsmotoren. Der Katalysator weist einen sich in Strömungsrichtung vor einem wabenförmigen Katalysatorkörper erweiternden Diffusor, einen sich in Strömungsrichtung hinter dem Katalysatorkörper verengenden Konverter und mindestens einen innerhalb des Diffusors und/oder Konverters angeordneten Strömungsleitkörper auf. Um eine gleichmäßige Anströmung an der Vorderseite des Katalysatorkörpers zu erreichen, ohne den Abgasstrom übermäßig zu drosseln, ist zumindest im Diffusor ein Strömungsleitkörper angeordnet, der aus einer Vielzahl von nebeneinanderliegenden und/oder schuppenförmig angeordneten Kanälen besteht, die zumindest teilweise einen in Strömungsrichtung zunehmenden Querschnitt aufweisen.

Die WO 97/43528 A1 offenbart einen Schalldämpfer zur Schalldämpfung und Reinigung von Abgasen, bestehend aus einem luftdichten Gehäuse, das mit einem Abgaseinlassrohr und einem Abgasauslassrohr verbunden ist und mindestens zwei akustische Kammern und einen oder mehrere monolithische Körper, wie Katalysatoren oder Partikelfilter, durch die Abgase in einer Strömungsrichtung in Längskanälen oder Porositäten strömen, enthält. Der Schalldämpferweist weiterhin ein oder mehrere Rohre oder Kanäle auf, wobei mindestens ein Rohr oder Kanal einen oder mehrere der monolithischen Körper durchdringt und Abgase in einer Strömungsrichtung leitet, die der Strömungsrichtung in den Kanälen oder Porositäten des monolithischen Körpers entgegengesetzt ist.

Die EP 1 890 016 A2 offenbart ein Verfahren zur Zugabe mindestens eines Reaktanden zu einem Abgasstrom einer Verbrennungskraftmaschine. Das Verfahren zeichnet sich dadurch aus, dass stromabwärts eines Elements zur Durchführung mindestens einer der folgenden Operationen: a) einer zumindest teilweisen Umsetzung und b) einer zumindest teilweisen Abscheidung zumindest einer Komponente des Abgasstroms eine Reaktandenströmung so zum Abgasstrom zugegeben wird, dass zumindest ein Teil der Reaktandenströmung auf das Element trifft.

Nachteilig an den Vorrichtungen aus dem Stand der Technik ist insbesondere, dass keine optimale Strömungsgleichverteilung und Konzentrationsgleichverteilung an den katalytisch aktiven Trägermatrizen erreicht wird, wodurch die Abgasnachbehandlung nicht optimal ist.

### Darstellung der Erfindung, Aufgabe, Lösung, Vorteile

Daher ist es die Aufgabe der vorliegenden Erfindung einen Ringkatalysator zu schaffen, welcher eine möglichst optimale Strömungsgleichverteilung am Einlassquerschnitt der katalytisch aktiven Matrizen erzeugt.

Die Aufgabe hinsichtlich des Ringkatalysators wird durch einen Ringkatalysator mit den Merkmalen von Anspruch 1 gelöst.

Ein Ausführungsbeispiel der Erfindung betrifft einen Ringkatalysator, mit einer ersten rohrförmigen Strömungsstrecke, mit einem Umlenkbereich und mit einer zweiten ringförmigen Strömungsstrecke, wobei die rohrförmige Strömungsstrecke durch ein Innenrohr gebildet ist, wobei die ringförmige Strömungsstrecke zwischen dem Innenrohr und einem das Innenrohr umgebenden Außenrohr ausgebildet ist und der Umlenkbereich zur Umlenkung der Abgasströmung aus der rohrförmigen Strömungsstrecke in die ringförmige Strömungsstrecke topfförmig ausgebildet ist, wobei das Innenrohr und/oder das Außenrohr einen entlang der Strömungsrichtung des Abgases sich erweiternden oder sich verjüngenden konischen Querschnitt aufweist, wobei das Innenrohr und/oder das Außenrohr einen entlang der Strömungsrichtung des Abgases sich erweiternden oder sich verjüngenden konischen Querschnitt aufweist, wobei in der ringförmigen Strömungsstrecke zumindest eine durch einen metallischen Wabenkörper gebildete Matrix angeordnet ist, wobei die Matrix einen dem Querschnittsverlauf der ringförmigen Strömungsstrecke folgenden Querschnittsverlauf aufweist, wobei der metallische Wabenkörper durch eine Vielzahl aufeinandergestapelter metallischer Folien gebildet ist, die zu dem Wabenkörper aufgewickelt sind, wobei zumindest einige Folien gewellt sind, wobei durch eine Variation der Wellhöhe und der Welldichte zwischen der Gaseintrittsseite und der Gasaustrittsseite der Matrix die Konizität des metallischen Wabenkörpers und somit der Matrix entlang ihrer Durchströmungsrichtung beeinflusst werden kann.

Das Innenrohr und das Außenrohr können konzentrisch miteinander angeordnet sein oder zueinander versetzt. Die konzentrische Anordnung ist vorteilhaft, um entlang des Umfangs jeweils gleichbleibende Querschnitte insbesondere entlang der rohrförmigen Strömungsstrecke zu erzeugen.

Durch die Konizität des Innenrohrs und/oder des Außenrohrs können verschieden Kombinationen erzeugt werden, die beispielsweise zu einer sich in Strömungsrichtung des Abgases verjüngenden oder sich erweiternden rohrförmigen Strömungsstrecke führen. Auch kann die ringförmige Strömungsstrecke sich in Strömungsrichtung des Abgases verjüngen oder erweitern. In einer speziellen Konfiguration kann die ringförmige Strömungsstrecke auch trotz konischem Innenrohr und konischem Außenrohr einen gleichbleibenden Querschnitt aufweisen.

Durch das konische Erweitern des Innenrohrs kann insbesondere der Wirkungsgrad eines vorgeschalteten Turboladers verbessert werden, da durch die Querschnittsvergrößerung in Strömungsrichtung dynamischer Druck in statischen Druck umgewandelt werden kann. Dies trägt zu einer verbesserten Wirkung des Turboladers bei, wodurch letztlich die Effizienz des den Turbolader antreibenden Verbrennungsmotors verbessert werden kann.

Die konische Ausführung des Außenrohrs ist vorteilhaft, um die Verhältnisse der Querschnittsflächen von der Gaseintrittsseite der ringförmigen Strömungsstrecke zur Gasaustrittsseite der ringförmigen Strömungsstrecke so anzupassen, dass Vorspannungsunterschiede in der in der ringförmigen Strömungsstrecke angeordneten Matrix ausgleichen werden können. Dadurch können Zelldeformationen in der Matrix verhindert werden und weiterhin das unerwünschte Auftreten von Löchern oder Öffnungen in der Matrix. Insgesamt kann somit insbesondere die Langlebigkeit des Ringkatalysators deutlich verbessert werden.

Je nach Anwendungsfall kann auch eine Mehrzahl von Matrizen vorgesehen sein, die unterschiedliche Beschichtungen aufweisen, um unterschiedliche Bestandteile des Abgases umzusetzen.

Metallische Wabenkörper können speziell angepasst werden, um sie an die räumlichen Gegebenheiten anzupassen. Insbesondere zur Vermeidung von ungewünschten Umströmungen um die Wabenkörper herum, ist es vorteilhaft, wenn der Wabenkörper an die Geometrie der Strömungsstrecke angepasst ist und bündig mit den Wandungen der Strömungsstrecke abschließt. Das Erzeugen von konischen Wabenkörpern ist bekannt und insbesondere über die oben genannten Maßnahmen erreichbar.

Durch ein Leitelement kann die Strömung, welche im Umlenkbereich nach dem Durchströmen der Gasaustrittsseite der rohrförmigen Strömungsstrecke und vor dem Durchströmen der Gaseintrittsseite der ringförmigen Strömungsstrecke umgelenkt wird, in eine bestimmte Richtung gelenkt werden beziehungsweise kann die Durchmischung der Gasströmung beeinflusst werden. Ein Leitelement kann als zusätzliches Bauteil ausgeführt sein, welches an einer der Innenwandungen angeordnet ist, oder auch integraler Bestandteil einer der Wandungen sein.

Dies ist insbesondere vorteilhaft, da keine zusätzlichen Bauteile benötigt werden und die Herstellung so besonders einfach ist. Durch eine wulstartige Umbiegung werden insbesondere Biegungen mit besonders kleinem Radius vermieden, wodurch Abrisskanten erzeugt werden könnten, die die Strömung des Abgases ungünstig beeinflussen können.

Dies ist insbesondere vorteilhaft, um eine möglichst homogene Strömungsverteilung und eine möglichst homogene Konzentrationsverteilung über die Querschnittsfläche der katalytisch aktiven Matrix zu erreichen.

Vorteilhafte Weiterbildungen der vorliegenden Erfindung sind in der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig. 1: eine schematische Ansicht des Innenrohrs und des Außenrohrs eines Ringkatalysators zur Verdeutlichung der unterschiedlichen Querschnittsflächen und Winkel,
- Fig. 2: eine schematische Schnittansicht durch den Ringkatalysator wobei der Umlenkbereich doppelwandig ausgeführt ist und mit einem Kühlmittel durchströmbar ist, und
- Fig. 3: eine Detailansicht des Umlenkbereichs und des am Innenrohr ausgebildeten Leitelementes.

### Bevorzugte Ausführung der Erfindung

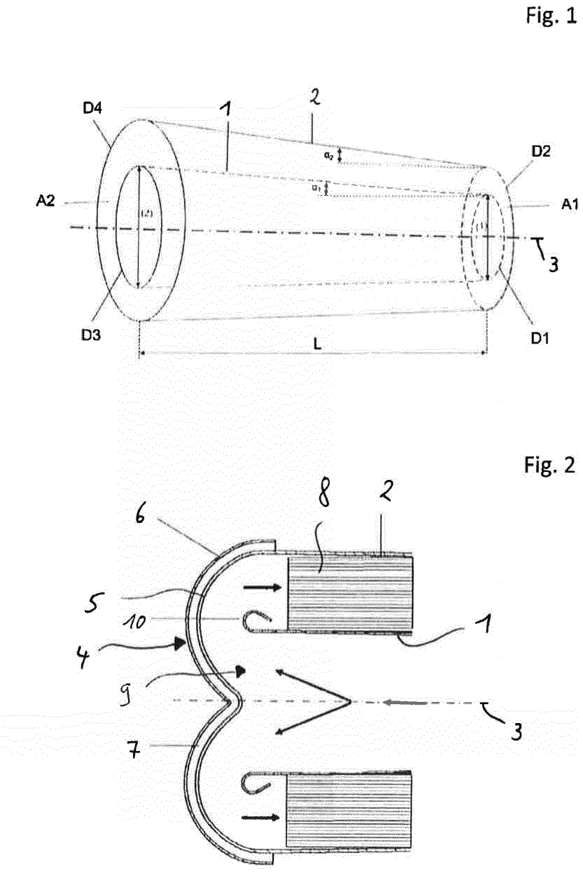

Die Figur 1 zeigt eine schematische Ansicht des Innenrohrs 2, welches von dem Außenrohr 2 umgeben ist. Die beiden Rohre 1 und 2 sind konzentrisch um die Mittelachse 3 ausgerichtet. Die Querschnittsfläche D1 ist an der Gaseintrittsseite des Innenrohrs 1 gezeigt, während die Querschnittsfläche D3 an der Gasaustrittsseite des Innenrohrs 1 dargestellt ist. Die Querschnittsfläche D4 beziehungsweise die Differenzfläche A2 zwischen der Querschnittsfläche D3 und D4 ist an der Gaseintrittsseite der ringförmigen Strömungsstrecke gezeigt, welcher zwischen dem Innenrohr 1 und dem Außenrohr 2 gebildet ist. Die Differenzfläche A1 zwischen den Querschnittsflächen D1 und D2 ist an der Gasaustrittsseite der ringförmigen Strömungsstrecke gezeigt.

Das Innenrohr 1 erweitert sich von der Gaseintrittsseite hin zur Gasaustrittsseite um den Winkel α1 gegenüber der Mittelachse 3. Das Außenrohr erweitert sich von seiner Gasaustrittsseite hin zu seiner Gaseintrittsseite um den Winkel α2 gegenüber der Mittelachse.

Die Durchströmungsreihenfolge ist von der Gaseintrittsseite des Innenrohrs 1 hin zur Gasaustrittsseite des Innenrohrs 1, dort findet in dem in Figur 1 nicht gezeigten Umlenkbereich eine Umlenkung des Abgases in die Gaseintrittsseite des Außenrohrs 2 beziehungsweise der ringförmigen Strömungsstrecke statt. Von dort strömt das Abgas hin zur Gasaustrittsseite der ringförmigen Strömungsstrecke beziehungsweise des Außenrohrs 2.

Die Rohre 1, 2 besitzen eine Länge L, die im Ausführungsbeispiel der Figur 1 identisch für beide Rohre 1, 2 ist.

Eine Variation des Winkel α1 und α2 führt zu unterschiedlichen Geometrien für die rohrförmige Strömungsstrecke und die ringförmige Strömungsstrecke. Insbesondere die ringförmige Strömungsstrecke kann einen entlang der Strömungsrichtung gleichbleibenden Querschnitt aufweisen oder einen sich verändernden Querschnitt.

Figur 2 zeigt eine Ansicht der Gasaustrittsseite der rohrförmigen Strömungsstrecke und dem daran sich anschließenden Umlenkbereich 4. Der Umlenkbereich 4 ist durch eine topfförmige Wandung 5 gebildet, welche als Prallwand für das einströmende Abgas dient und schließlich für eine Umlenkung des Abgases in radialer Richtung nach Außen und schließlich in die ringförmige Strömungsstrecke hinein sorgt.

Wie an den Pfeilen in der Figur 2 zu erkennen ist, ist die Strömungshauptrichtung in der rohrförmigen Strömungsstrecke entgegengesetzt zu der Strömungshauptrichtung in der ringförmigen Strömungsstrecke.

Weiterhin ist eine zweite Wandung 6 gezeigt, welche dem Verlauf der Innenwandung 5 folgt und somit einen durchströmbaren Bereich 7 ausbildet, beispielsweise einen Kanal oder ein anderweitiges geschlossenes durchströmbares Volumen. Dieses kann von einem Kühlmittel durchströmt werden und somit kann Wärmeenergie aus dem Abgas über die Innenwandung 5 abgeleitet werden.

Das freie Ende des Innenrohrs 1 weist zudem eine wulstartige Umbiegung radial nach Außen und in den ringförmigen Strömungsstrecke hinein auf. Dadurch wird das Leitelement 10 erzeugt, welches die Abgasströmung im von dem Umlenkbereich 4 eingeschlossenen Volumen 9 verbessern soll. Das Leitelement 10 ist in radiale Richtung vollständig umlaufend ausgebildet.

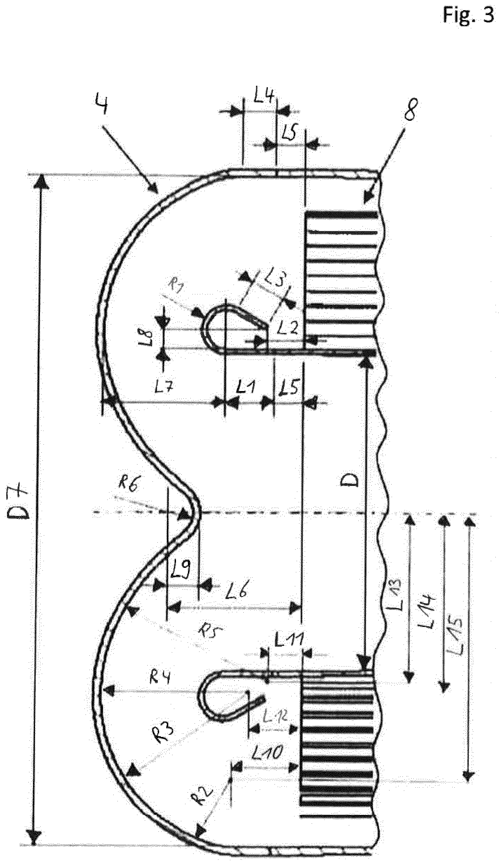

Figur 3 zeigte eine Detailansicht des Umlenkbereich 4 und insbesondere der Grö-ßenverhältnisse der Innenwandung 5 und dem Leitelement 10 im Vergleich zum Durchmesser D der rohrförmigen Strömungsstrecke an ihrem Gasaustritt. Ein Umlenkbereich 4 und ein Leitelement 10, welche Abmessungen innerhalb der in der nachfolgenden Tabelle angegebenen Größenordnungen aufweisen ist besonders vorteilhaft, um eine möglichst homogene Strömung am Gaseintritt der ringförmigen Strömungsstrecke beziehungsweise der katalytisch aktiven Matrix 8 zu erzeugen.

| |
|---|
| 0,0153 ≤ R1/D ≥ 3,450 |
| 0,0153 ≤ R2/D ≥ 3,461 |
| 0,0076 ≤ R3/D ≥ 3,461 |
| 0,0076 ≤ R4/D ≥ 3,461 |
| 0,0153 ≤ R5/D ≥ 3,461 |
| 0,0153 ≤ R6/D ≥ 3,461 |
| 1,100 ≤ D7/D ≥ 3,461 |
| 0,0153 ≤ L1/D ≥ 3,384 |
| 0,0076 ≤ L2/D ≥ 3,384 |
| 0,0153 ≤ L3/D ≥ 3,384 |
| 0,0153 ≤ L4/D ≥ 3,438 |
| 0,0153 ≤ L5/D ≥ 3,438 |
| 0,0000 ≤ L6/D ≥ 3,469 |
| 0,0153 ≤ L7/D ≥ 3,4446 |
| 0,0153 ≤ L8/D ≥ 3,450 |
| 0,0153 ≤ L9/D ≥ 4,230 |
| 0,0460 ≤ L10/D ≥ 3,461 |
| 0,0460 ≤ L11/D ≥ 3,461 |
| 0,0460 ≤ L12/D ≥ 3,461 |
| 0,0153 ≤ L13/D ≥ 3,461 |
| 0,0153 ≤ L14/D ≥ 3,461 |
| 0,0153 ≤ L15/D ≥ 3,461 |

Das freie Ende des Innenrohres ist dabei nach Außen umgebogen und kommt nicht wieder in Anlage zur Außenseite des Innenrohres. Die Bezugszeichen L1 bis L15 geben dabei jeweils Längen einzelner Abschnitte an. Die Bezugszeichen R1 bis R6 bezeichnen unterschiedliche Radien der Bauteile. Das Bezugszeichen D bezeichnet den Durchmesser des Innenrohrs an seiner Gasaustrittsseite und das Bezugszeichen D7 bezeichnet den Durchmesser des Außenrohres an seiner Gaseintrittsseite.

Die unterschiedlichen Merkmale der einzelnen Ausführungsbeispiele können auch untereinander kombiniert werden. Die Ausführungsbeispiele der Figuren 1 bis 3 weisen insbesondere keinen beschränkenden Charakter auf und dienen der Verdeutlichung des Erfindungsgedankens.

## Patentansprüche

1. Ringkatalysator, mit einer ersten rohrförmigen Strömungsstrecke, mit einem Umlenkbereich (4) und mit einer zweiten ringförmigen Strömungsstrecke, wobei die rohrförmige Strömungsstrecke durch ein Innenrohr (1) gebildet ist, wobei die ringförmige Strömungsstrecke zwischen dem Innenrohr (1) und einem das Innenrohr umgebenden Außenrohr (2) ausgebildet ist und der Umlenkbereich (4) zur Umlenkung der Abgasströmung aus der rohrförmigen Strömungsstrecke in die ringförmige Strömungsstrecke topfförmig ausgebildet ist, wobei das Innenrohr (1) und/oder das Außenrohr (2) einen entlang der Strömungsrichtung des Abgases sich erweiternden oder sich verjüngenden konischen Querschnitt (D1, D2, D3, D4) aufweist, **dadurch gekennzeichnet, dass** in der ringförmigen Strömungsstrecke zumindest eine durch einen metallischen Wabenkörper gebildete Matrix (8) angeordnet ist, wobei die Matrix (8) einen dem Querschnittsverlauf der ringförmigen Strömungsstrecke folgenden Querschnittsverlauf aufweist, wobei der metallische Wabenkörper (8) durch eine Vielzahl aufeinandergestapelter metallischer Folien gebildet ist, die zu dem Wabenkörper (8) aufgewickelt sind, wobei zumindest einige Folien gewellt sind, wobei durch eine Variation der Wellhöhe und der Welldichte zwischen der Gaseintrittsseite und der Gasaustrittsseite der Matrix (8) die Konizität des metallischen Wabenkörpers (8) und somit der Matrix (8) entlang ihrer Durchströmungsrichtung beeinflusst werden kann.

## Claims

1. Annular catalytic converter, having a first, tubular flow path, having a diverting region (4) and having a second, annular flow path, wherein the tubular flow path is formed by an inner pipe (1), wherein the annular flow path is formed between the inner pipe (1) and an outer pipe (2) surrounding the inner pipe, and the diverting region (4), for diverting the exhaust-gas flow from the tubular flow path into the annular flow path, is of potshaped form, wherein the inner pipe (1) and/or the outer pipe (2) have/has a conical cross section (D1, D2, D3, D4) that widens or narrows along the flow direction of the exhaust gas, **characterized in that** at least one matrix (8) formed by a metallic honeycomb body is arranged in the annular flow path, wherein the matrix (8) has a cross-sectional profile which follows the cross-sectional profile of the annular flow path, wherein the metallic honeycomb body (8) is formed by a multiplicity of metallic foils which are stacked one on top of the other and which are wound up to form the honeycomb body (8), wherein at least some foils are corrugated, wherein the conicity of the metallic honeycomb body (8) and thus of the matrix (8) along its flow direction can be influenced by variation of the corrugation height and of the corrugation density between the gas inlet side and the gas outlet side of the matrix (8).

## Revendications

1. Catalyseur annulaire, avec un premier trajet d'écoulement tubulaire, avec une zone de déviation (4) et avec un deuxième trajet d'écoulement annulaire, le trajet d'écoulement tubulaire étant formé par un tube intérieur (1), le trajet d'écoulement annulaire étant réalisé entre le tube intérieur (1) et un tube extérieur (2) entourant le tube intérieur et la zone de déviation (4) étant réalisée en forme de pot pour dévier le flux de gaz d'échappement du trajet d'écoulement tubulaire dans le trajet d'écoulement annulaire, le tube intérieur (1) et/ou le tube extérieur (2) présentant une section transversale conique (D1, D2, D3, D4) s'élargissant ou se rétrécissant le long de la direction d'écoulement du gaz d'échappement, **caractérisé en ce qu'**au moins une matrice (8) formée par un corps métallique en nid d'abeilles est agencée dans le trajet d'écoulement annulaire, la matrice (8) présentant un tracé de section transversale suivant le tracé de section transversale du trajet d'écoulement annulaire, le corps métallique en nid d'abeilles (8) étant formé par une pluralité de feuilles métalliques empilées les unes sur les autres, qui sont enroulées pour former le corps en nid d'abeilles (8), au moins certaines feuilles étant ondulées, une variation de la hauteur des ondulations et de la densité des ondulations entre le côté d'entrée des gaz et le côté de sortie des gaz de la matrice (8) permettant d'influencer la conicité du corps métallique en nid d'abeilles (8) et donc de la matrice (8) le long de sa direction d'écoulement.
